# EUROPEAN PATENT SPECIFICATION

(11) **EP 4 641 714 B1**
(45) Date of publication and mention of the grant of the patent: **28.10.2026**
(21) Application number: 25171002.6
(22) Date of filing: 16.04.2025
(51) Int. Cl.: H01M 8/04029, H01M 8/04082

(54) **FUEL CELL SYSTEM AND METHOD OF FEEDING FUEL TO A FUEL CELL**
BRENNSTOFFZELLENSYSTEM UND VERFAHREN ZUR BRENNSTOFFVERSORGUNG EINER BRENNSTOFFZELLE
SYSTÈME DE PILE À COMBUSTIBLE ET PROCÉDÉ D'ALIMENTATION EN COMBUSTIBLE D'UNE PILE À COMBUSTIBLE

(30) Priority: 23.04.2024 NL 2037522
(43) Date of publication of application: 29.10.2025
(73) Proprietor: TriCryo B.V., 1771 RW Wieringerwerf (NL)
(72) Inventor: Keezer, Marcel Nicolaas, 1771 RW Wieringerwerf (NL)
(74) Representative: Arnold & Siedsma

(56) References cited:
- DE-A1- 102015 222 781
- US-B2- 10 347 923
- US-B2- 11 139 497

## Description

The invention relates to a fuel cell system, in particular for increasing the efficiency of a fuel cell and auxiliary devices.

Fuel cells are used in the generation of electricity from chemicals, and have gained attention as a substitute for batteries. Compared to batteries, fuel cells have a significant advantage that they do not require long charge times. Depending on the fuel storage mechanism used, fuel cell systems can also achieve a relatively large energy density (in terms of energy stored per unit volume and/or energy stored per unit mass). This makes fuel cells appeal for high performance applications, such as aerospace. As compared to fossil fuel powered engines, fuel cells have the obvious advantage that they efficiently combust hydrogen, which allows zero-emission application depending on the hydrogen source.

Nevertheless, widespread adoption in e.g. aerospace has so far been hindered by the fuel cell's dependence on relatively bulky auxiliary devices, which may pose problems in terms of mass or energy consumption. In particular, compressors used for increasing the fuel cell's efficiency are relatively heavy and energy intensive

US 11 139 497 B2 discloses a fuel cell system comprising a fuel cell, a blower, an ejector, an oxidizer, a heater, and a cryogenic heat-exchanging apparatus.

The invention therefore has as its object to provide a fuel cell system which is more efficient, in terms of energy usage and/or power capacity per unit weight.

To this end, the fuel cell system described herein includes a fuel cell feed for feeding fuel and a pressurized oxygen containing gas to a fuel cell, a cryogenic storage tank for storing a cryogenically cooled liquid fuel, and a heat exchange system comprising a gas inlet and a first outlet, a fuel inlet connected to the cryogenic storage tank, and a fuel outlet, and a first liquid inlet and a first gas outlet. The heat exchange system is configured to heat fuel coming from the fuel inlet and feeding heated fuel to the fuel outlet, and cool oxygen containing gas from the gas inlet using fuel from the fuel inlet, thereby condensing at least part of said gas into a liquid, and output said liquid as a first oxygen containing liquid, at the first outlet.

The fuel cell system further comprises a liquid reservoir connected to the first outlet for storing the first oxygen containing liquid, and a first liquid pump connected to the liquid reservoir, wherein the first liquid pump is configured to provide the first oxygen containing liquid at an increased pressure to the first liquid inlet, and the heat exchange system is further configured to heat the liquid coming from the first liquid inlet, to provide a first gas at the first gas outlet as the pressurized oxygen containing gas. The fuel cell feed comprises the first gas outlet and the fuel outlet.

The fuel cell system is used to feed fuel and oxygen to a fuel cell. Both of these are fed in gaseous form. Both can be gaseous mixtures, with only a percentage of fuel or oxygen respectively, or a relatively pure gas could be used. In any case, the oxygen containing gas is fed to the fuel cell in a pressurized condition in order to increase the efficiency of the fuel cell.

The fuel cell system described herein is based on a cryogenically cooled liquid fuel, such as liquid hydrogen. Such fuels have the advantage that they can store energy with a relatively high energy density in terms of volume, as compared to e.g. non-cooled and/or even pressurized hydrogen. Furthermore, pressurizing fuels for storage may have the disadvantage that a relatively large amount of energy is needed for pressurization. This energy is not trivially used, and therefore often lost at least to some extent. Also, the tanks for a cryogenic liquid may be less stringent than a pressurized tank, leading to e.g. a lighter overall structure.

When using cryogenically cooled liquid fuel, the fuel cell system has a relatively large amount cold (or, the lack of heat) available. The fuel cell system described herein is based on the realization that this cold can be used given a properly designed heat exchange system.

The heat exchange system is firstly configured to heat the fuel before passing it to the fuel outlet. This way, the fuel can be brought to a higher temperature, for instance one suitable for use in the fuel cell. In order to heat the fuel, it has to absorb heat from a heat source. The heat source used by the heat exchange system is the oxygen containing gas, which may be let in from the environment. The oxygen containing gas may thus be ambient air. By sufficiently cooling the oxygen containing gas, at least a part of the gas is condensed into a liquid, which also contains oxygen.

The oxygen containing liquid is accumulated in a storage reservoir, which may of course be relatively small. A first liquid pump is provided to increase the pressure of the oxygen containing liquid. The pressurized oxygen containing liquid is then again processed by the heat exchange system, which heats it with the same or another heat source. This heating step allows the oxygen containing liquid to evaporate at a relatively high pressure, thereby thus creating a pressurized oxygen containing gas, which can be fed to the fuel cell as well.

The system thus laid out, may have several advantages. Primarily, note that there are at least two positions in which an external heat source, in this case ambient air, is used to provide heat. The system thus effectively allows absorbing ambient heat, which causes a net flow of energy into the system. The system in its entirety improves in efficiency as a result.

Another advantage may be that the oxygen containing gas, which is pressurized, was pressurized in its liquid phase using a pump. Thus pressurization step is relatively inexpensive in terms of energy consumption, whereas the alternative of compressing oxygen containing gas directly, for instance using a compressor, is typically very expensive in terms of energy consumption.

Efficiency gains are thus available using the system described herein, but other advantages are also achievable. As an example, by increasing the efficiency, the entire system (including the fuel cell) may be dimensioned smaller in order to save weight whilst providing a similar capacity. Also, the pump used in lieu of a compressor may save weight, possibly adding to benefits of the system thus laid out.

As a result, the fuel cell system is particularly suitable for use in which energy efficiency and/or weight are important, such as in the aerospace sector.

The fuel cell system may further comprise a liquid fuel pump connected to the cryogenic storage tank and to the heat exchange system to feed pressurized fuel to the heat exchange system.

Pressurizing the fuel, preferably before it enters the heat exchange system, allows to provide pressurized fuel to the fuel cell, thereby increasing its efficiency. Moreover, by increasing the pressure when in liquid form, no energy-intensive compression is needed.

The fuel cell system may further include a recuperator recuperator for generating power, preferably electricity, from an expanding gas stream, for instance an exhaust gas stream from a fuel cell part of, or connected to, the fuel cell system.

The recuperator can be e.g. a turbine. Because the oxygen containing gas and optionally the fuel fed to the fuel cell are pressurized, the reaction products may also be at elevated pressure. This pressure can be used by expanding the relevant gas stream in a recuperator to further increase the efficiency of the system as a whole. The recuperator may be connected to the anode and/or to the cathode side of the fuel cell.

A further advantage may be obtained if the heat exchange system further includes a second outlet, and when the heat exchange system is configured to perform cryogenic separation on the oxygen containing gas from the gas inlet, thereby creating a first oxygen rich fraction as the first oxygen containing liquid to be output at the first outlet, and a second oxygen depleted fraction, and output the second oxygen depleted fraction at the second outlet.

In this way, the cold from the cryogenically cooled fuel can be used to perform cryogenic separation on the oxygen containing gas. By then using an oxygen enriched gas for feeding back to the heat exchange system, superfluous products need not be processed by the heat exchange system, thereby increasing its efficiency. As an example, nitrogen and/or carbon dioxide, the other main constituents of ambient air, may be separated from the oxygen and let out. As a result, these need not be cooled, pumped, or otherwise processed, leading to less stringent requirements on the systems used. Additionally or alternatively, the efficiency of the fuel cell may be further increased when an oxygen enriched gas is offered instead of e.g. air with ambient oxygen concentrations.

When cryogenic separation is employed, the heat exchange system may further comprise a second gas inlet, and an exhaust. The second gas outlet may be cycled back to the second gas inlet, and the heat exchange system may be further configured to heat gas from the second gas inlet, and exhaust that via the exhaust.

Accordingly, an oxygen poor gas (or liquid) can be exhausted. However, since due to the separation said material is cold, it may be used to extract further heat from the environment before being exhausted. This may increase the total available amount of cold material, which may enhance efficiency.

Cryogenic separation can be performed for instance if the heat exchange system comprises a first gas liquid separator for cryogenic separation, the gas liquid separator comprising the first outlet and the second outlet, the gas liquid separator being configured to output a liquid at the first outlet and a gas at the second outlet.

Accordingly, use can be made of the difference in condensation temperatures of the constituents of the oxygen containing gas to separate them.

The heat exchange system may comprise a second gas liquid separator, the heat exchange system being connected to the second gas liquid separator in order to separate water from the oxygen containing gas using the second gas liquid separator.

Water in the oxygen containing gas, such as in air let in from the environment, may hinder operation of the fuel cell system. Using a gas liquid separator the water can be filtered out, for instance as a first filtering step for the oxygen containing gas. In order to condense the water in the oxygen containing gas, it may be cooled using e.g. the cryogenically cooled fuel. The oxygen containing gas may afterwards be cooled further to provide the oxygen containing liquid, thereby effectively creating a two-step cooling process with a water exhaust step in between.

The system may include a fuel cell connected to the fuel cell feed, but may also function as fuel cell auxiliary system, which can be connected to a fuel cell but is a separate system of itself.

The fuel cell may comprise at least one exhaust, and the at least one exhaust may be coupled to the recuperator if it is present. Accordingly, the recuperator can win back energy still present in the pressurization of exhausts from the fuel cell.

Additionally or alternatively, the at least one exhaust may be connected back to the heat exchange system. Heat and/or cold, or unreacted products may be reused to further increase efficiency. As an example, excess fuel may be fed back into the heat exchange system. Unused oxygen containing gas, water (e.g. as reaction product) and heat may also be fed back into the heat exchange system.

The invention also relates to a method of feeding fuel, from a cryogenic storage tank containing cryogenically cooled fuel, and oxygen to a fuel cell, the method comprising letting in an oxygen containing gas, exchanging heat between the oxygen containing gas and the fuel to heat the fuel and to cool the oxygen containing gas, thereby condensing at least a part of the oxygen containing gas into a first oxygen containing liquid, pressurizing the first oxygen containing liquid by pumping it, and heating and evaporating the first oxygen containing liquid to provide a pressurized oxygen containing gas to the fuel cell.

The method may have the characteristics and/or advantages presented above in relation to the fuel cell system, in any suitable combination. In particular, the method may be performed using a fuel cell system as described herein.

The method may comprise pressurizing the fuel when it is liquid to further optimize the efficiency of the fuel cell.

The fuel may be evaporated before feeding it to the fuel cell, to allow effective use of the fuel in the fuel cell.

A further efficiency advantage may be achieved by further including cryogenically separating a first oxygen rich fraction from the oxygen containing gas.

The separation may be performed by cooling the oxygen containing gas, for instance using the fuel. The oxygen containing gas may for instance be air. In such a case, the gas contains mainly oxygen, nitrogen, water and carbon dioxide. Cooling the gas allows first to extract water near the condensation point of water. When further cooling the gas, e.g. to approximately 88 K, the oxygen condenses. At this point, oxygen may be separated from the other products, amongst which mainly nitrogen. The nitrogen may be exhausted, optionally after heating it.

It is noted that both in the fuel cell system and in the method described herein, it is possible to cool the oxygen containing gas until a part of it is condensed, or until almost all or substantially all of it has been condensed. In each case, the efficiency gains described herein may be applied. It is even possible to achieve an efficiency gain if the gas is not condensed, but merely cooled. In this way, the gas is denser when its pressure is increased, leading to a more optimal use of the auxiliary devices. Of course in this case, a compressor may be used instead of a pump.

The method may further include recuperating energy from a fuel cell exhaust gas stream to further enhance efficiency.

The invention will be further described with reference to the attached drawings, in which:
Figure 1 shows schematically a fuel cell system and a fuel cell;
Figure 2 shows schematically another fuel cell system and a fuel cell; and
Figure 3 shows schematically a method according to the invention.

Throughout the figures, like elements are referred to using like reference numerals. Elements of different embodiments are identified using reference numerals increased by 100 (one hundred).

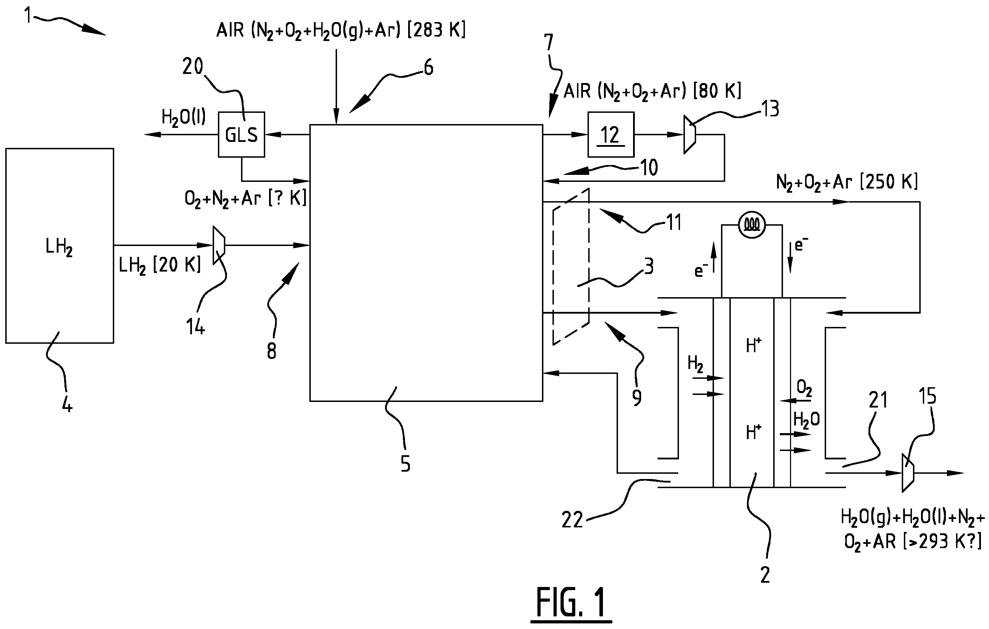

Figure 1 shows a fuel cell system 1, connected to a fuel cell 2. The fuel cell system 1 includes fuel cell feed 3, for feeding fuel and a pressurized oxygen containing gas to the fuel cell 2. The fuel cell system 1 also comprises a heat exchange system 5. The fuel cell system 1 further includes a cryogenic storage tank 4, in this example containing liquid hydrogen (LH₂). The heat exchange system 5 includes a gas inlet 6 and a first outlet 7. A fuel inlet 8 is also present, connected to the cryogenic storage tank 4. A fuel outlet 9 is also provided. Further, a first liquid inlet 10 and a first gas outlet 11 can be identified. The first gas outlet 11 and the fuel outlet 9 are comprised by the fuel cell feed 3.

Fuel LH₂ from the fuel cryogenic storage tank 4 is in this case pumped using a second liquid pump 14 into the fuel inlet 8. The fuel is heated by the heat exchange system 5 and provided at the fuel outlet 9 as gaseous fuel H₂. The fuel is used in the heat exchange system 5 as a source of cold (i.e. to absorb heat). Before the fuel is entered into the heat exchange system 5, its pressure is increased using a second liquid pump 14.

At the same time, an oxygen containing gas is let in through the gas inlet 6. In this case, the oxygen containing gas is ambient air 6. First, the oxygen containing gas is cooled, for instance using the fuel, by the heat exchange system 5. When cooling, water present in the oxygen containing gas condenses, and is taken out using a second gas liquid separator 20, and exhausted as liquid water H₂O. The remaining oxygen containing gas is processed further by the heat exchange system 5.

Then the, oxygen containing gas is cooled further, for instance to 80 K. at this temperature, nitrogen N₂, oxygen O₂ and argon Ar present in the oxygen containing gas are condensed. The liquid is temporarily held in a liquid reservoir 12, and then pumped to a higher pressure using a first liquid pump 13. The heat exchange system 5 then takes back in that liquid at a higher pressure, in order to heat and evaporate it. The result is a pressurized oxygen containing gas at the first outlet 11.

The fuel and the oxygen containing gas are then fed to the fuel cell, which can used their increased pressure to run more efficiently. It is noted that the cold fuel is used as a source for cold, and the ambient air, or otherwise the oxygen containing gas let in at the gas inlet 6, is used as a source for heat. However, multiple cold or heat sources may further be connected to the heat exchange system. In particular, heat from the fuel cell 2 may be fed back to the heat exchange system 5.

The fuel cell 2 in general consumes the fuel and oxygen and creates an electric current. The only waste product is water H₂O, but unburnt and inert gases (fuel, nitrogen, argon) may also be exhausted. Exhausts 21, 22 are provided for this purpose. In the example shown, the waste stream from a cathode side of the fuel cell is expanded in a recuperator 15 and then exhausted. Unspent fuel is recycled back to the heat exchange system 5.

The unspent fuel from exhaust 22 is generally used as a carrier for waste materials, typically water. Although shown in a simplified schematic, it is customary to remove the water from that fuel in order to feed back the unspent fuel to the fuel cell. This is however not strictly necessary, and therefore not described in detail herein.

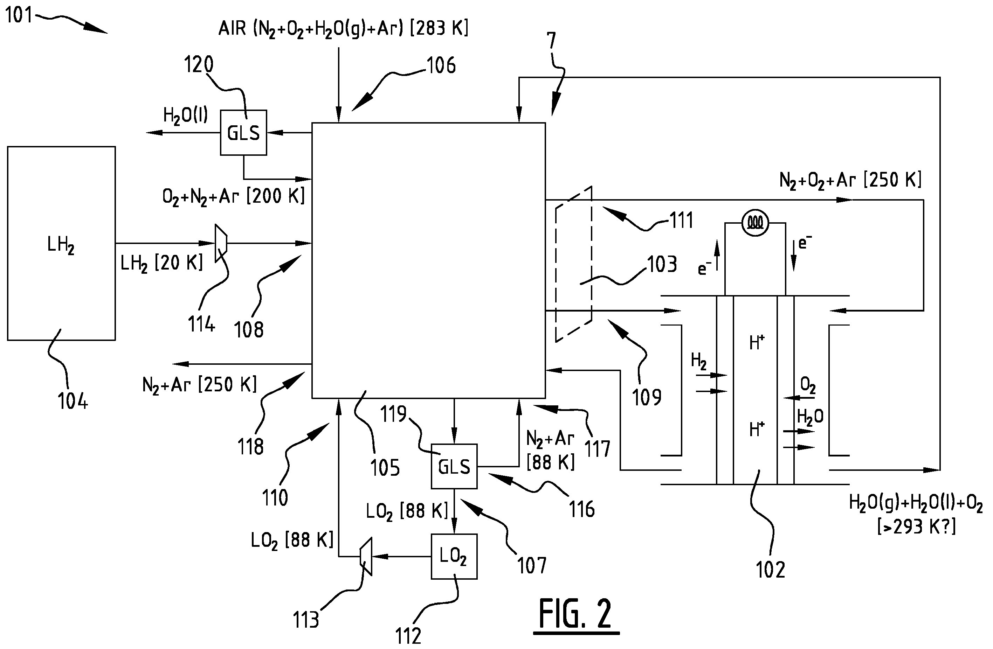

**Please continue reading on page 8 line 1 of the text currently on file: '*****Figure 2*** ***shows a...'***

Figure 2 shows a similar system, and will be described by only mentioning the differences with respect to figure 1. Firstly, the heat exchange system 101 of figure 2 still includes a first outlet 107, but is in this case further provided with a first gas liquid separator 119 which provides that first outlet 107, but also provides a second gas outlet 116. Accordingly, the heat exchange system 104 is configured to perform cryogenic separation by cooling the incoming oxygen containing gas to, in this case 88 K. At this temperature, the oxygen condenses and can be separated from nitrogen N₂ and argon Ar. The two latter gasses can be fed back to the heat exchange system 104 to reuse them as a cold source, before being exhausted at an exhaust 118. The oxygen O₂ is stored as a liquid LO₂ similar to in figure 1, but is purified.

As a further difference, exhaust from the cathode side of the fuel cell is fed back to the heat exchange system. Material in the stream includes mainly water and oxygen. The latter can be reused once the water is separated out, e.g. by condensation and the gas liquid separator 120. It is noted that it is principally possible to provide oxygen to the fuel cell 102 in exactly the required amount, thereby avoiding a waste stream. However, excess oxygen can be used to increase efficiency and/or as carrier for waste water (and other products if present).

It is noted that in the exhaust stream of figure 2, it is also possible to place the recuperator 15 from figure 1 if desired.

It is noted that figures 1 and 2 show exemplary temperatures, based on standard ambient temperatures for the air. The concepts described herein can of course be applied without adhering to these temperatures exactly, especially at different (ambient) pressures. In particular, the system can be readily in colder environments, for instance high up in the air. Although ambient temperatures can be significantly lower up in the air (e.g. 70 K lower), the fuel stored at e.g. approximately 20 K is sufficiently cold to still extract heat from ambient air.

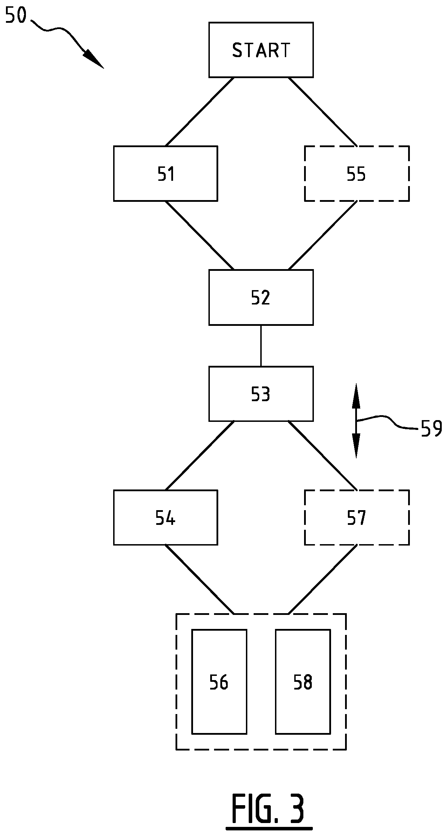

Figure 3 shows a flow chart for a method 50 as described herein. The method 50 consists of feeding fuel, from a cryogenic storage tank containing cryogenically cooled fuel, and oxygen to a fuel cell. The method 50 compries a step 51 of letting in an oxygen containing gas. This gas is then, in a second step 52, cooled using the cryogenically cooled fuel by exchanging heat. At least a part of the oxygen containing gas is then condensed into a first oxygen containing liquid. In a next step 53, the first oxygen containing liquid is pressurized by pumping it, for instance with a liquid pump. Finally, in another step 54, the first oxygen containing liquid is heated and evaporated to provide a pressurized oxygen containing gas to the fuel cell. Using arrow 59 it is shown that the cooling step 52 and the heating step 54 may be performed simultaneously in a continuous process, thereby conserving energy.

Further optional steps are shown, such as a step 55 of pressurizing the fuel when it is still liquid, for instance using a liquid pump. Another series of optional steps 56, 57, 58 include a step 57 of cryogenically separating a first oxygen rich fraction from the oxygen containing gas. Further, the fuel may be evaporated 56 before feeding it to the fuel cell. Moreover, energy may be recuperated 58 from a fuel cell exhaust gas stream.

The present invention is not limited to the embodiment shown, but extends also to other embodiments falling within the scope of the appended claims.

## Claims

1. Fuel cell system (1, 101) for increasing the efficiency of a fuel cell (2, 102) and auxiliary devices, the fuel cell system (1, 101) including a fuel cell feed (3, 103) for feeding fuel and a pressurized oxygen containing gas to a fuel cell (2, 102), a cryogenic storage tank (4, 104) for storing a cryogenically cooled liquid fuel, and a heat exchange system (5, 105) comprising:
- a gas inlet (6, 106) and a first outlet (7, 107); and
- a fuel inlet (8, 108) connected to the cryogenic storage tank (4, 104), and a fuel outlet (9);
- a first liquid inlet (10, 110) and a first gas outlet (11, 111);
the heat exchange system (5, 105) being configured to:
- heat fuel coming from the fuel inlet (8, 108) and feeding heated fuel to the fuel outlet (9, 109),
- cool oxygen containing gas from the gas inlet (6, 106) using fuel from the fuel inlet (8, 108), thereby condensing at least part of said gas into a liquid, and output said liquid as a first oxygen containing liquid, at the first outlet (7, 107);
wherein the fuel cell system (1, 101) further comprises a liquid reservoir (12, 112) connected to the first outlet (7, 107) for storing the first oxygen containing liquid, and a first liquid pump (13, 113) connected to the liquid reservoir (12, 112), wherein the first liquid pump (13, 113) is configured to provide the first oxygen containing liquid at an increased pressure to the first liquid inlet (10, 110), wherein the heat exchange system (5, 105) is further configured to:
- heat the liquid coming from the first liquid inlet (10, 110), to provide a first gas at the first gas outlet (11, 111) as the pressurized oxygen containing gas,
wherein the fuel cell feed (3, 103) comprises the first gas outlet (11, 111) and the fuel outlet (9, 109).

2. Fuel cell system (1, 101) according to the previous claim, further comprising a liquid fuel pump (14, 114) connected to the cryogenic storage tank (4, 104) and to the heat exchange system (5, 105) to feed pressurized fuel to the heat exchange system (5, 105).

3. Fuel cell system (1) according to the previous claim, further including a recuperator (15) for generating power, preferably electricity, from an expanding gas stream, for instance an exhaust gas stream from a fuel cell (2) part of, or connected to, the fuel cell system (1).

4. Fuel cell system (101) according to any of the preceding claims, wherein the heat exchange system (105) further includes:
- a second outlet (116),
and wherein the heat exchange system (105) is configured to:
- perform cryogenic separation on the oxygen containing gas from the gas inlet (106), thereby creating a first oxygen rich fraction as the first oxygen containing liquid to be output at the first outlet (107), and a second oxygen depleted fraction,
- output the second oxygen depleted fraction at the second outlet (116).

5. Fuel cell system (101) according to the previous claim, wherein the heat exchange system (105) further comprises:
- a second gas inlet (117), and an exhaust (118);
wherein the second outlet (116) is cycled back to the second gas inlet (117), and wherein the heat exchange system (105) is further configured to:
- heat gas from the second gas inlet (117), and exhaust that via the exhaust (118).

6. Fuel cell system (101) according to any one of claims 4 - 5, wherein the heat exchange system (105) comprises a first gas liquid separator (119) for cryogenic separation, the first gas liquid separator (119) comprising the first outlet (107) and the second outlet (116), the first gas liquid separator (119) being configured to output a liquid at the first outlet (107) and a gas at the second outlet (116).

7. Fuel cell system (1, 101) according to any of the preceding claims, wherein the heat exchange system (5, 105) comprises a second gas liquid separator (20, 120), the heat exchange system (5, 105) being connected to the second gas liquid separator (20, 120) in order to separate water from the oxygen containing gas using the second gas liquid separator (20, 120).

8. Fuel cell system (1, 101) according to any of the preceding claims, further including a fuel cell (2, 102) connected to the fuel cell feed (3, 103).

9. Fuel cell system (1) according to the previous claim, the fuel cell (2) comprising at least one exhaust (21, 22), the at least one exhaust (21) optionally being coupled to the recuperator (15) if it is present.

10. Fuel cell system (1) according to the previous claim, wherein the at least one exhaust (22) is connected back to the heat exchange system (5).

11. Method (50) of feeding fuel, from a cryogenic storage tank (4, 104) containing cryogenically cooled fuel, and oxygen to a fuel cell (2, 102), the method (50) comprising:
- letting (51) in an oxygen containing gas;
- exchanging (52) heat between the oxygen containing gas and the fuel to heat the fuel and to cool the oxygen containing gas, thereby condensing at least a part of the oxygen containing gas into a first oxygen containing liquid;
- pressurizing (53) the first oxygen containing liquid by pumping it; and
- heating and evaporating (54) the first oxygen containing liquid to provide a pressurized oxygen containing gas to the fuel cell (2).

12. Method (50) according to the previous claim, further comprising pressurizing (55) the fuel when it is liquid.

13. Method (50) according to any of the preceding method claims, further including evaporating (56) the fuel before feeding it to the fuel cell (2).

14. Method (50) according to any of the preceding method claims, further including cryogenically separating (57) a first oxygen rich fraction from the oxygen containing gas.

15. Method (50) according to any of the preceding method claims, further including recuperating (58) energy from a fuel cell (2) exhaust gas stream.

## Patentansprüche

1. Brennstoffzellensystem (1, 101) zum Erhöhen des Wirkungsgrads einer Brennstoffzelle (2, 102) und von Hilfsvorrichtungen, wobei das Brennstoffzellensystem (1, 101) eine Brennstoffzellenzufuhr (3, 103) zum Zuführen von Brennstoff und einem druckbeaufschlagten sauerstoffhaltigen Gas zu einer Brennstoffzelle (2, 102), einen kryogenen Lagerungstank (4, 104) zum Lagern eines kryogen gekühlten flüssigen Brennstoffs und ein Wärmeaustauschsystem (5, 105) einschließt, umfassend:
- einen Gaseinlass (6, 106) und einen ersten Auslass (7, 107); und
- einen Brennstoffeinlass (8, 108), der mit dem kryogenen Lagerungstank (4, 104) verbunden ist, und einen Brennstoffauslass (9);
- einen ersten Flüssigkeitseinlass (10, 110) und einen ersten Gasauslass (11, 111);
wobei das Wärmeaustauschsystem (5, 105) konfiguriert ist zum:
- Erwärmen von Brennstoff, der aus dem Brennstoffeinlass (8, 108) stammt, und Zuführen von erwärmtem Brennstoff zu dem Brennstoffauslass (9, 109),
- Kühlen von sauerstoffhaltigem Gas aus dem Gaseinlass (6, 106) unter Verwendung von Brennstoff aus dem Brennstoffeinlass (8, 108), wodurch mindestens ein Teil des Gases zu einer Flüssigkeit kondensiert wird, und Ausgeben der Flüssigkeit als eine erste sauerstoffhaltige Flüssigkeit an dem ersten Auslass (7, 107);
wobei das Brennstoffzellensystem (1, 101) ferner ein Flüssigkeitsreservoir (12, 112), das mit dem ersten Auslass (7, 107) verbunden ist, zum Lagern der ersten sauerstoffhaltigen Flüssigkeit, und eine erste Flüssigkeitspumpe (13, 113), die mit dem Flüssigkeitsreservoir (12, 112) verbunden ist, umfasst, wobei die erste Flüssigkeitspumpe (13, 113) konfiguriert ist, um die erste sauerstoffhaltige Flüssigkeit mit einem erhöhten Druck an den ersten Flüssigkeitseinlass (10, 110) bereitzustellen,
wobei das Wärmeaustauschsystem (5, 105) ferner konfiguriert ist zum:
- Erwärmen der Flüssigkeit, die aus dem ersten Flüssigkeitseinlass (10, 110) stammt, um ein erstes Gas an dem ersten Gasauslass (11, 111) als das druckbeaufschlagte sauerstoffhaltige Gas bereitzustellen,
wobei die Brennstoffzellenzufuhr (3, 103) den ersten Gasauslass (11, 111) und den Brennstoffauslass (9, 109) umfasst.

2. Brennstoffzellensystem (1, 101) nach dem vorstehenden Anspruch, ferner umfassend eine Flüssigbrennstoffpumpe (14, 114), die mit dem kryogenen Lagerungstank (4, 104) und mit dem Wärmeaustauschsystem (5, 105) verbunden ist, um dem Wärmeaustauschsystem (5, 105) druckbeaufschlagten Brennstoff zuzuführen.

3. Brennstoffzellensystem (1) nach dem vorstehenden Anspruch, das ferner einen Rekuperator (15) zum Generieren von Leistung, vorzugsweise Strom, aus einem expandierenden Gasstrom, zum Beispiel einem Abgasstrom aus einer Brennstoffzelle (2), die Teil des Brennstoffzellensystems (1) ist oder mit diesem verbunden ist, einschließt.

4. Brennstoffzellensystem (101) nach einem der vorstehenden Ansprüche, wobei das Wärmeaustauschsystem (105) ferner einschließt:
- einen zweiten Auslass (116),
und wobei das Wärmeaustauschsystem (105) konfiguriert ist zum:
- Durchführen einer kryogenen Trennung an dem sauerstoffhaltigen Gas aus dem Gaseinlass (106), wodurch eine erste sauerstoffreiche Fraktion als die erste sauerstoffhaltige Flüssigkeit, die an dem ersten Auslass (107) auszugeben ist, und eine zweite sauerstoffarme Fraktion erzeugt werden,
- Ausgeben der zweiten sauerstoffarmen Fraktion an dem zweiten Auslass (116).

5. Brennstoffzellensystem (101) nach dem vorstehenden Anspruch, wobei das Wärmeaustauschsystem (105) ferner umfasst:
- einen zweiten Gaseinlass (117) und eine Abführung (118);
wobei der zweite Auslass (116) zu dem zweiten Gaseinlass (117) zurückgeführt wird, und wobei das Wärmeaustauschsystem (105) ferner konfiguriert ist zum:
- Erwärmen von Gas aus dem zweiten Gaseinlass (117) und Abführen davon über die Abführung (118).

6. Brennstoffzellensystem (101) nach einem der Ansprüche 4 bis 5, wobei das Wärmeaustauschsystem (105) einen ersten Gas-Flüssigkeits-Abscheider (119) für die kryogene Trennung umfasst, der erste Gas-Flüssigkeits-Abscheider (119) umfassend den ersten Auslass (107) und den zweiten Auslass (116), wobei der erste Gas-Flüssigkeits-Abscheider (119) konfiguriert ist, um eine Flüssigkeit an dem ersten Auslass (107) und ein Gas an dem zweiten Auslass (116) auszugeben.

7. Brennstoffzellensystem (1, 101) nach einem der vorstehenden Ansprüche, wobei das Wärmeaustauschsystem (5, 105) einen zweiten Gas-Flüssigkeits-Abscheider (20, 120) umfasst, wobei das Wärmeaustauschsystem (5, 105) mit dem zweiten Gas-Flüssigkeits-Abscheider (20, 120) verbunden ist, um Wasser von dem sauerstoffhaltigen Gas unter Verwendung des zweiten Gas-Flüssigkeits-Abscheiders (20, 120) zu trennen.

8. Brennstoffzellensystem (1, 101) nach einem der vorstehenden Ansprüche, das ferner eine Brennstoffzelle (2, 102), die mit der Brennstoffzellenzufuhr (3, 103) verbunden ist, einschließt.

9. Brennstoffzellensystem (1) nach dem vorstehenden Anspruch, die Brennstoffzelle (2) umfassend mindestens eine Abführung (21, 22), wobei die mindestens eine Abführung (21) optional an den Rekuperator (15) gekoppelt ist, falls dieser vorhanden ist.

10. Brennstoffzellensystem (1) nach dem vorstehenden Anspruch, wobei die mindestens eine Abführung (22) wieder mit dem Wärmeaustauschsystem (5) verbunden ist.

11. Verfahren (50) zum Zuführen von Brennstoff aus einem kryogenen Lagerungstank (4, 104), der kryogen gekühlten Brennstoff enthält, und Sauerstoff zu einer Brennstoffzelle (2, 102), das Verfahren (50) umfassend:
- Einlassen (51) eines sauerstoffhaltigen Gases;
- Austauschen (52) von Wärme zwischen dem sauerstoffhaltigen Gas und dem Brennstoff, um den Brennstoff zu erwärmen und um das sauerstoffhaltige Gas abzukühlen, wodurch mindestens ein Teil des sauerstoffhaltigen Gases zu einer ersten sauerstoffhaltigen Flüssigkeit kondensiert wird;
- Druckbeaufschlagen (53) der ersten sauerstoffhaltigen Flüssigkeit durch Pumpen davon; und
- Erwärmen und Verdampfen (54) der ersten sauerstoffhaltigen Flüssigkeit, um der Brennstoffzelle (2) ein druckbeaufschlagtes sauerstoffhaltiges Gas bereitzustellen.

12. Verfahren (50) nach dem vorstehenden Anspruch, ferner umfassend das Druckbeaufschlagen (55) des Brennstoffs, wenn er flüssig ist.

13. Verfahren (50) nach einem der vorstehenden Verfahrensansprüche, das ferner das Verdampfen (56) des Brennstoffs, bevor er zu der Brennstoffzelle (2) zugeführt wird, einschließt.

14. Verfahren (50) nach einem der vorstehenden Verfahrensansprüche, das ferner ein kryogenes Trennen (57) einer ersten sauerstoffreichen Fraktion von dem sauerstoffhaltigen Gas einschließt.

15. Verfahren (50) nach einem der vorstehenden Verfahrensansprüche, das ferner ein Rekuperieren (58) von Energie aus einem Abgasstrom einer Brennstoffzelle (2) einschließt.

## Revendications

1. Système de pile à combustible (1, 101) permettant d'augmenter le rendement d'une pile à combustible (2, 102) et de dispositifs auxiliaires, le système de pile à combustible (1, 101) comportant une alimentation de pile à combustible (3, 103) permettant d'introduire du combustible et un gaz contenant de l'oxygène sous pression dans une pile à combustible (2, 102), un réservoir de stockage cryogénique (4, 104) permettant de stocker un combustible liquide refroidi cryogéniquement, et un système d'échange de chaleur (5, 105) comprenant :
- une première entrée (6, 106) et une première sortie (7, 107) ; et
- une entrée de combustible (8, 108) reliée au réservoir de stockage cryogénique (4, 104), et une sortie de combustible (9) ;
- une première entrée de liquide (10, 110) et une première sortie de gaz (11, 111) ;
le système d'échange de chaleur (5, 105) étant configuré pour :
- chauffer du combustible provenant de l'entrée de combustible (8, 108) et introduire du combustible chauffé dans la sortie de combustible (9, 109),
- refroidir un gaz contenant de l'oxygène provenant de l'entrée de gaz (6, 106) à l'aide du combustible provenant de l'entrée de combustible (8, 108), permettant ainsi de condenser au moins une partie dudit gaz en un liquide, et délivrer ledit liquide en tant que premier liquide contenant de l'oxygène, au niveau de la première sortie (7, 107) ;
dans lequel le système de pile à combustible (1, 101) comprend en outre un réservoir de liquide (12, 112) relié à la première sortie (7, 107) permettant de stocker le premier liquide contenant de l'oxygène, et une première pompe à liquide (13, 113) reliée au réservoir de liquide (12, 112), dans lequel la première pompe à liquide (13, 113) est configurée pour fournir le premier liquide contenant de l'oxygène à une pression accrue à la première entrée de liquide (10, 110), dans lequel le système d'échange de chaleur (5, 105) est en outre configuré pour :
- chauffer le liquide provenant de la première entrée de liquide (10, 110), afin de fournir un premier gaz au niveau de la première sortie de gaz (11, 111) en tant que gaz contenant de l'oxygène sous pression,
dans lequel l'alimentation de pile à combustible (3, 103) comprend la première sortie de gaz (11, 111) et la sortie de combustible (9, 109).

2. Système de pile à combustible (1, 101) selon la revendication précédente, comprenant en outre une pompe à combustible liquide (14, 114) reliée au réservoir de stockage cryogénique (4, 104) et au système d'échange de chaleur (5, 105) pour fournir du combustible sous pression au système d'échange de chaleur (5, 105).

3. Système de pile à combustible (1) selon la revendication précédente, comportant en outre un récupérateur (15) permettant de générer de l'énergie, de préférence de l'électricité, à partir d'un courant de gaz en expansion, par exemple un courant de gaz d'échappement provenant d'une pile à combustible (2) faisant partie du système de pile à combustible (1), ou y étant connectée.

4. Système de pile à combustible (101) selon l'une quelconque des revendications précédentes, dans lequel le système d'échange de chaleur (105) comporte en outre :
- une seconde sortie (116),
et dans lequel le système d'échange de chaleur (105) est configuré pour :
- effectuer une séparation cryogénique sur le gaz contenant de l'oxygène provenant de l'entrée de gaz (106), permettant ainsi de créer une première fraction riche en oxygène en tant que premier liquide contenant de l'oxygène à délivrer au niveau de la première sortie (107), et une seconde fraction appauvrie en oxygène,
- délivrer la seconde fraction appauvrie en oxygène au niveau de la seconde sortie (116).

5. Système de pile à combustible (101) selon la revendication précédente, dans lequel le système d'échange de chaleur (105) comprend en outre :
- une seconde entrée de gaz (117), et un échappement (118) ;
dans lequel la seconde sortie (116) est recyclée vers la seconde entrée de gaz (117), et dans lequel le système d'échange de chaleur (105) est en outre configuré pour :
- chauffer du gaz provenant de la seconde entrée de gaz (117), et l'évacuer par le biais de l'évacuation (118).

6. Système de pile à combustible (101) selon l'une quelconque des revendications 4 à 5, dans lequel le système d'échange de chaleur (105) comprend un premier séparateur gaz-liquide (119) en vue d'une séparation cryogénique, le premier séparateur gaz-liquide (119) comprenant la première sortie (107) et la seconde sortie (116), le premier séparateur gaz-liquide (119) étant configuré pour délivrer un liquide au niveau de la première sortie (107) et un gaz au niveau de la seconde sortie (116).

7. Système de pile à combustible (1, 101) selon l'une quelconque des revendications précédentes, dans lequel le système d'échange de chaleur (5, 105) comprend un second séparateur gaz-liquide (20, 120), le système d'échange de chaleur (5, 105) étant relié au second séparateur gaz-liquide (20, 120) de manière à séparer l'eau du gaz contenant de l'oxygène à l'aide du second séparateur gaz-liquide (20, 120).

8. Système de pile à combustible (1, 101) selon l'une quelconque des revendications précédentes, comportant en outre une pile à combustible (2, 102) connectée à l'alimentation de pile à combustible (3, 103).

9. Système de pile à combustible (1) selon la revendication précédente, la pile à combustible (2) comprenant au moins un échappement (21, 22), l'au moins un échappement (21) étant facultativement couplé au récupérateur (15) s'il est présent.

10. Système de pile à combustible (1) selon la revendication précédente, dans lequel l'au moins un échappement (22) est relié en retour au système d'échange de chaleur (5).

11. Procédé (50) d'introduction de combustible, à partir d'un réservoir de stockage cryogénique (4, 104) contenant du combustible refroidi cryogéniquement, et d'oxygène à une pile à combustible (2, 102), le procédé (50) comprenant :
- le fait de laisser entrer (51) un gaz contenant de l'oxygène ;
- l'échange (52) de chaleur entre le gaz contenant de l'oxygène et le combustible pour chauffer le combustible et pour refroidir le gaz contenant de l'oxygène, permettant ainsi de condenser au moins une partie du gaz contenant de l'oxygène en un premier liquide contenant de l'oxygène ;
- la mise sous pression (53) du premier liquide contenant de l'oxygène en le pompant ; et
- le chauffage et l'évaporation (54) du premier liquide contenant de l'oxygène pour fournir un gaz contenant de l'oxygène sous pression à la pile à combustible (2).

12. Procédé (50) selon la revendication précédente, comprenant en outre la mise sous pression (55) du combustible lorsqu'il est liquide.

13. Procédé (50) selon l'une quelconque des revendications de procédé précédentes, comportant en outre l'évaporation (56) du combustible avant de l'introduire dans la pile à combustible (2).

14. Procédé (50) selon l'une quelconque des revendications de procédé précédentes, comportant en outre la séparation cryogénique (57) d'une première fraction riche en oxygène à partir du gaz contenant de l'oxygène.

15. Procédé (50) selon l'une quelconque des revendications de procédé précédentes, comportant en outre la récupération (58) d'énergie à partir d'un courant de gaz d'échappement de pile à combustible (2).
